# EUROPEAN PATENT APPLICATION

(11) **EP 4 822 343 A1**
(43) Date of publication of application: **14.10.2026**
(21) Application number: 26168669.5
(22) Date of filing: 27.03.2026
(51) Int. Cl.: G01N 23/046

(54) **A METHOD FOR SCANNING AN OBJECT IN A SCANNING APPARATUS**

(30) Priority: 07.04.2025 GB 202505191
(71) Applicant: Rolls-Royce plc, London N1 9FX (GB)
(72) Inventor: Mulloth, Akhil, Derby, DE24 8BJ (GB)
(74) Representative: Rolls-Royce plc

(57) **Abstract**

A method for scanning an object in a scanning apparatus comprises: placing the object into a container which surrounds the object, a volume of the container surrounding the object comprising a supporting material that supports the object in a fixed position relative to the container; disposing the container on a support of the scanning apparatus so that the container is positioned between an imaging beam emitting element and an imaging beam receiving element disposed on opposite sides of the support, the support configured to allow movement of the container relative to the emitting and receiving elements to allow creation of a plurality of projections of the object each taken at a different relative position; operating the scanning apparatus at the multiple relative positions to produce the plurality of projections; and: processing the projections to create an image of the object. The method is characterised in that the support is configured to allow the container to be rotated to any angular position within a spherical coordinate system.

## Description

### CROSS REFERENCE TO RELATED APPLICATIONS

This represents the first application directed towards the subject matter.

### FIELD

This disclosure relates to methods and apparatus for scanning objects using computed tomography.

### BACKGROUND

The present disclosure is relevant to various scanning technologies, but a primary application is three-dimensional x-ray computed tomography (CT) which combines multiple x-ray images to recreate a 3-dimensional (3D) volume, so may be referred to as 3DCT scanning. An x-ray source, or imaging beam emitting element, produces polychromatic or monochromatic x-rays that penetrate an object and form an x-ray image or projection on a detector, or imaging beam receiving element. In a known 3DCT technique the object is rotated through 360 degrees while being imaged multiple times. The x-ray images are then processed, for example combined via a process called reconstruction, to produce a 3D representation of the object. Surface determination may be performed to distinguish the object volume from the background. Subsequently, cross sections of the object may be viewed by a user.

CT and other scanning may be used to inspect non-line-of-sight areas of parts, for example vanes and turbine blades, that are not accessible to alternative inspection techniques such as borescopes. This is important to be able to deliver novel geometries, for example for cast metal turbine blades and additively manufactured components.

Known arrangements for 3DCT scanning teach that the object is positioned on a support that is configured to rotate about a (usually vertical) axis of rotation so that the object rotates about the axis of rotation. The object may be inclined to create an angle between the axis of rotation and a longitudinal axis of the object. In this case, the orientation of the object may be selected to minimise the path length that the x-ray penetrates. Known arrangements teach that bigger and thicker objects generally produce lower quality scans as they create more beam scattering. Aiming to reduce beam hardening and poor penetration, the known arrangements teach to increase the voltage of the x-ray emitting apparatus and to use a physical or software-based scatter correction. Increasing the voltage produces a higher number of x-rays capable of penetrating more material. The same part scanned at a higher voltage will generally produce a higher quality image for this and other reasons. However, too high a voltage will reduce the difference in contrast between two materials as the material will attenuate fewer x-rays.

Components with complex cross sections and/or cross sections that change along their length, such as turbine blades and vanes, present additional scanning challenges. A turbine blade may present an aerofoil cross-section with a leading edge and a trailing edge. The leading-edge cross-section is thicker than the trailing edge cross-section. The aerofoil section of the object may have a concave blade surface on one side bounded at either end by the leading and trailing edges and a convex blade surface on the other side. Optimising the CT scan parameters for all these elements at the same time is difficult. In particular, the concave side of the blade has the tendency to have a high level of noise, leading to what is known as the concave wall (or concave side) effect. A concave wall effect produces image artifacts formed on or around the image of the object due to beam hardening and haloing, reducing the accuracy of surface determination in that region.

It is desirable to improve the quality and efficiency of CT scanning of objects. In particular, it is desirable to improve the quality and efficiency of CT scanning of objects having complex cross sections, where it is difficult to optimise the scan parameters for complex and varied elements of an object.

### SUMMARY

According to a first aspect, there is provided a method for scanning an object in a scanning apparatus, the method comprising: placing the object into a container which surrounds the object, a volume of the container surrounding the object comprising a supporting material that supports the object in a fixed position relative to the container; disposing the container on a support of the scanning apparatus so that the container is positioned between an imaging beam emitting element and an imaging beam receiving element disposed on opposite sides of the support, the support configured to allow movement of the container relative to the emitting and receiving elements to allow creation of a plurality of projections of the object each taken at a different relative position; operating the scanning apparatus at the multiple relative positions to produce the plurality of projections; and: processing the projections to create an image of the object; the method characterised in that the support is configured to allow the container to be rotated to any angular position within a spherical coordinate system.

In an arrangement, the container is spherical.

In an arrangement, the support is configured to allow a selected point (r, θ, φ) on a surface of the container to be rotated to any position relative to the emitting and receiving elements.

In an arrangement, the supporting material has an imaging beam attenuation close to the imaging beam attenuation of the material of the object.

In an arrangement, the imaging beam attenuation of the supporting material is the same as or lower than the imaging beam attenuation of the material of the object.

In an arrangement, the supporting material comprises a powder.

In an arrangement, the supporting material comprises one or more solid elements substantially filling the volume of the container surrounding the object.

In an arrangement, the supporting material comprises a 3-dimensional structure.

In an arrangement, the supporting material is formed of the same material as the object.

In an arrangement, the method further comprises surrounding or partially surrounding the object with a border region, the border region having an imaging beam attenuation different from the imaging beam attenuation of the object.

In an arrangement, the border region is formed by inserting the object into a protective film or wall or sleeve.

In an arrangement, a plurality of objects is placed into the container and spaced apart within the container.

In an arrangement, each of the objects is located at a vertex of a regular polyhedron.

In an arrangement, each of a first set of objects is located at a vertex of a first regular polyhedron and each of a second set of objects is located at a vertex of a second regular polyhedron within the first regular polyhedron.

In an arrangement, a second container is supported within the container, and in which each of the second set of objects is placed into the second container and each of the first set of objects is placed into the container.

In an arrangement, the scanning apparatus is a computational tomography (CT) scanning apparatus, and the imaging beam is an x-ray.

In an arrangement, the scanning apparatus is a three-dimensional computational tomography (3DCT) scanning apparatus.

According to a second aspect, there is provided a combination of a scanning apparatus for scanning an object and a filled container in the scanning apparatus, the filled container comprising: a container which surrounds the object, a volume of the container surrounding the object comprising a supporting material that supports the object in a fixed position relative to the container; and the scanning apparatus comprising: a support for the container; an imaging beam emitting element and an imaging beam receiving element disposed on opposite sides of the support, the support positioning the container between the imaging beam emitting element and the imaging beam receiving element, the support configured to allow movement of the container relative to the emitting and receiving elements to allow creation of a plurality of projections of the object each taken at a different relative position, so that when the scanning apparatus is operated at the multiple relative positions it produces the plurality of projections; and processing means to create an image of the object from the plurality of projections; the combination characterised in that the support is configured to allow the container to be rotated in use to any angular position within a spherical coordinate system.

The skilled person will appreciate that except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

### BRIEF DESCRIPTION OF THE DRAWINGS

Examples will now be described by way of example only with reference to the accompanying drawings, in which:
**FIG. 1** is a schematic illustration showing a known 3DCT scanning apparatus;
**FIG. 2** is a flow chart showing steps of a method for scanning an object in a scanning apparatus;
**FIG. 3** is a diagonal view of an aerofoil section of a turbine blade;
**FIG. 4** is a sectional plan view of an aerofoil section of a turbine blade positioned within a container;
**FIG. 5** is a sectional plan view of an aerofoil section of a turbine blade positioned within a container and supported by a 3-dimensional structure;
**FIG. 6** is a schematic view of a container disposed on a support comprising rollers; and
**FIG. 7** is a schematic view of a plurality of objects arranged for scanning.

### DETAILED DESCRIPTION

This application discloses improvements over and enhancements to the scanning methods and apparatus disclosed in the inventor's US Patent applications 18/524,081, 18/536,834, 18/536,847, and 18/536,868, all of which are incorporated herein by this reference.

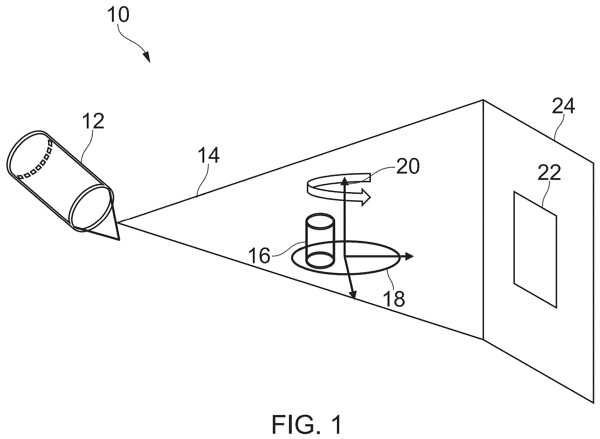

**FIG. 1** shows a known 3DCT scanning apparatus 10 and illustrates the basic principles of a known scanning method. The apparatus 10 may be used to perform a volumetric scan. The scanning apparatus 10 comprises an imaging beam (i.e. x-ray) emitting element 12, a support 18 and an imaging beam (i.e. x-ray) detecting element 24. The volumetric scan may be any scan which can generate a 3-dimensional (3D) image of an object 16 positioned on the support 18 and contained within an x-ray beam cone 14. The x-ray emitting element 12 generates the x-ray beam cone 14 which may comprise polychromatic x-rays (not shown). The support 18 comprises a table on which the object is positioned and is configured to rotate about a vertical axis of rotation 20 so that the object 16 rotates about the axis of rotation. The object is shown here as a simple cylinder. The x-rays penetrate the object and are received by the x-ray detecting element 24. An x-ray projection or image 22 of the object is formed from the output of the x-ray detecting element 24. For example, as described above the object is rotated through 360 degrees while being imaged multiple times. The x-ray projections or images 22 are then processed, for example combined via a process called reconstruction, to produce a 3D representation of the object. Surface determination may be performed to distinguish the object volume from the background. Subsequently, the output may be processed in a known manner to form one or more two-dimensional images in the form of "slices" (cross-sections) through the object.

As will be appreciated, to capture complete slices through the relevant part of the object using a technique such as that described above, the part of the object being scanned should remain entirely within the x-ray beam cone whilst it is rotated.

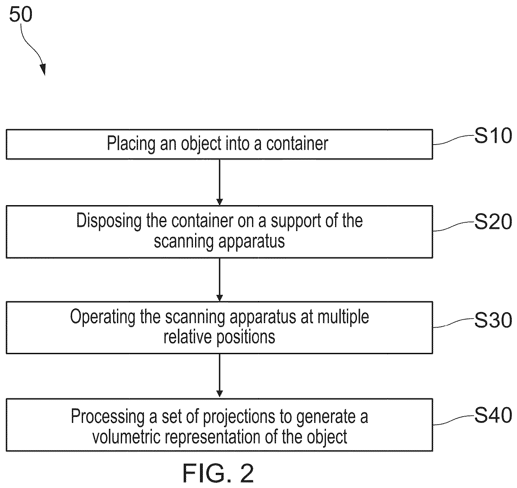

**FIG. 2** is a flow chart showing steps of a method 50 for scanning an object in a scanning apparatus. In step S10 the object is manually, for example, placed into a container. In step S20 the container is disposed on a support of a scanning apparatus, such as that shown in FIG. 1. In step S30 the scanning apparatus is operated at multiple relative positions. One or more projections of the object contained within the container may be taken at each relative position to yield a set of projections. In step S40 a complete volumetric representation of the object may then be obtained by suitable processing of the set of projections, for example the projections may be combined via a process called reconstruction. The volumetric representation may comprise a plurality of voxels, with each voxel representing a sub-volume of the image. Subsequently the image can be viewed in cross sections.

A disadvantage of known 3DCT scanning methods is that rotation of the object 16 about a single vertical axis 20 limits the quality and efficiency of the scanning, especially for objects with complex cross sections. For example, the scanning of a turbine blade having a concave blade surface is likely to give rise to the concave wall effects noted above, and such effects can only be partially or imperfectly overcome by known techniques such as increasing the voltage of the x-ray beam (which may itself introduce other undesirable effects). As noted above, it is known to incline the object being scanned to create an angle between the axis of rotation and a longitudinal axis of the object, for example to minimise the path length that the x-ray penetrates. It is also known (as described by Lorenz Butzhammer and Tino Hausotte, 2021 Meas. Sci. Technol. 32 105402DOI 10.1088/1361-6501/ac08c4) to mount the object on a six-legged mounting jig or hexapod. This may allow a slightly more complex trajectory of rotation of the object by allowing the object to be tilted relative to the vertical axis (albeit only to the extent permitted by the hexapod's range of motion), and thereby allow projections of the object to be taken over a slightly wider range of positions.

The inventor has recognised that by adopting an entirely novel approach to the positioning and rotation of an object to be scanned, it is possible to provide almost unlimited freedom in the selection of a rotational or translational trajectory and thereby to permit the taking of projections through the object in any desired direction. This increased flexibility in scanning allows the scanning parameters to be optimised, and thereby to achieve higher quality and more efficient scanning of objects, especially those with complex cross sections or complex external or internal features.

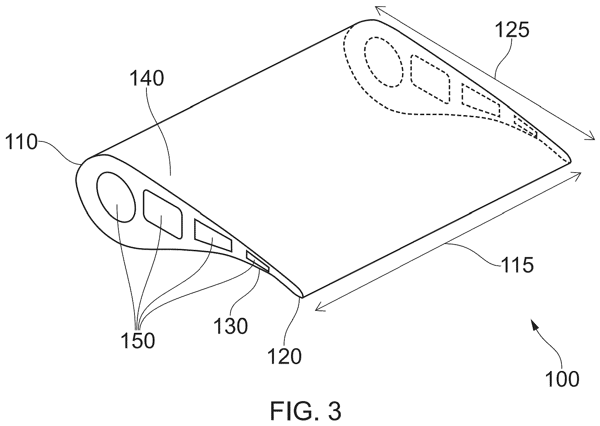

**FIG. 3** shows a diagonal view of an aerofoil section of a turbine blade 100. Other parts of the blade, such as a mounting section, are less relevant and not shown. The turbine blade in this arrangement is formed from a metal material which may be cast metal, but the teaching herein can be applied to objects of any scannable material.

The turbine blade 100 comprises a leading edge 110, a trailing edge 120, and blade surfaces between these edges, such as a concave surface 130 and a convex surface 140. The concave surface extends in an inwardly curved shape between the leading edge and the trailing edge. The convex surface of the turbine blade extends in a similar manner to the concave surface, but with an outward curve and is opposite to the concave surface. There may be void regions 150 within the blade 100 where there is no material. In the arrangement of FIG. 3 there are four voids, although it will be apparent to the skilled reader that more or fewer voids may be present.

As shown in FIG. 3, the turbine blade comprises an elongate aerofoil section of the turbine blade having a span 115. Further, a chord 125 may be drawn between the extremities of the leading edge 110 and the trailing edge 120.

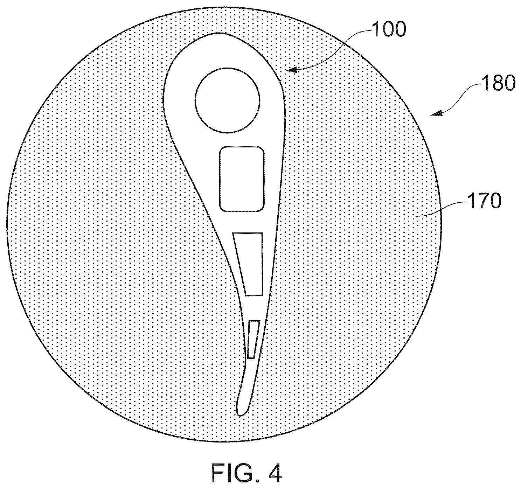

**FIG. 4** is a sectional view of the turbine blade 100 of FIG. 3 disposed within a spherical container 180. The container 180 contains a supporting material 170 that supports the turbine blade 100 in a fixed position relative to the container 180. The supporting material 170 may be a powder, or it may comprise one or more solid elements substantially filling the volume of the container surrounding the turbine blade 100.

For example, the supporting material 170 may comprise a plurality of solid or essentially solid parts that can be assembled in use to surround and support the turbine blade 100, so that the supporting material 170 and the turbine blade 100 together substantially fill the volume of the spherical container 180.

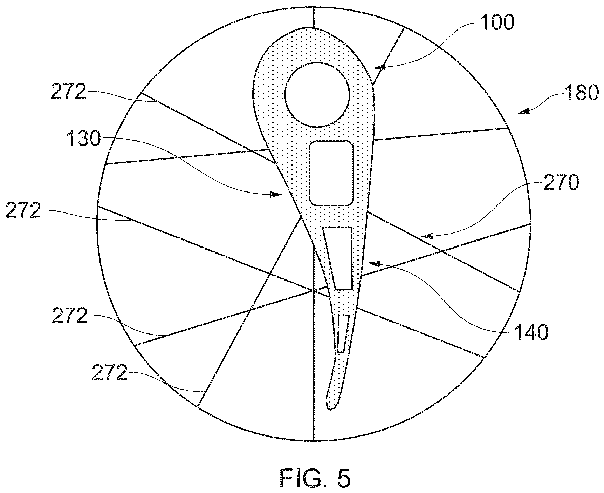

**FIG. 5** is a sectional view of the turbine blade 100 of FIG. 3 disposed within a spherical container 180. The container 180 contains a supporting material 270. In the arrangement shown in FIG. 5, the supporting material 270 comprises a 3-dimensional structure or lattice consisting of a plurality of elongate lattice elements 272, the elongate lattice elements 272 extending in different directions to span the volume of the container 180 surrounding the turbine blade 100. It will be appreciated that FIG. 5 shows only a single 2-dimensional view of the 3-dimensional structure or lattice, which will also extend in other directions within the spherical container 180. The ends of the lattice elements 272 may abut, or may be attached to, the inner surface of the container 180 and the surfaces (130, 140 in FIG. 3) of the turbine blade 100. The lattice elements 272 may be attached to one another at suitable points along their lengths. The 3-dimensional structure may have a regular or symmetrical form, or alternatively it may have a more irregular or asymmetrical form. The latter may permit, for example, optimisation of the 3-dimensional structure by providing support only where needed.

In any of the arrangements described above in connection with FIG. 4 and FIG. 5, the spherical container 180 may be constructed in any convenient manner provided the outer surface is a sphere. For example, the spherical container 180 may comprise two hemispherical sections that can be releasably attached together to form a sphere; or the spherical container 180 may comprise a plurality of sections of any convenient sizes or shapes that can be releasably attached together to form a sphere; or the spherical container 180 may comprise a substantially spherical section having a sealable opening through which the blade 100 and the supporting material 170 may be introduced and removed. This last arrangement may be particularly suitable if the supporting material 170 is a powder.

In any of the arrangements described above in connection with FIG. 4 and FIG. 5, the supporting material 170, 270 may have an imaging beam attenuation close to the imaging beam attenuation of the material of the turbine blade 100, or it may have an imaging beam attenuation the same as the imaging beam attenuation of the material of the turbine blade 100. For example, the supporting material 170, 270 may be made from the same material as the turbine blade.

In any of the arrangements described above in connection with FIG. 4 and FIG. 5, the turbine blade 100 may be covered by a polymer film (not shown in the drawings) to prevent contact between the object and the supporting material. Alternatively, the blade may be wrapped or placed within a 'sleeve-like' wall or cooperating walls (preferably contiguous with the blade surfaces) to separate it from the supporting material. The film or wall may prevent contamination of the blade from the supporting material. Further, the film or wall may provide a region between the supporting material and the blade that has an imaging beam attenuation different from the blade's imaging beam attenuation. For example, the polymer film may have a lower imaging beam attenuation than the blade. Thus, there will be a contrast in the image scan at the boundary between the supporting material and the blade. This may help to distinguish the blade from the supporting material in the image scan.

Averaging out the material thickness of an object such as a turbine blade 100 by placing it in a container with a supporting material may reduce artifacts caused by the concave wall effect, scattering and beam hardening effects. The container may thereby provide an "ideal" cross section for scanning in which the thickness of material to be penetrated is constant for all the projections. This "ideal" cross section may further improve the image quality and contrast of the scan. Furthermore, by providing a more uniform material thickness and beam attenuation the 3DCT scanning parameters may be optimised, hence improving scanning efficiency.

It will be appreciated that the arrangements described herein may equally well be applied to any object for which 3DCT scanning is suitable, and not only to turbine blades.

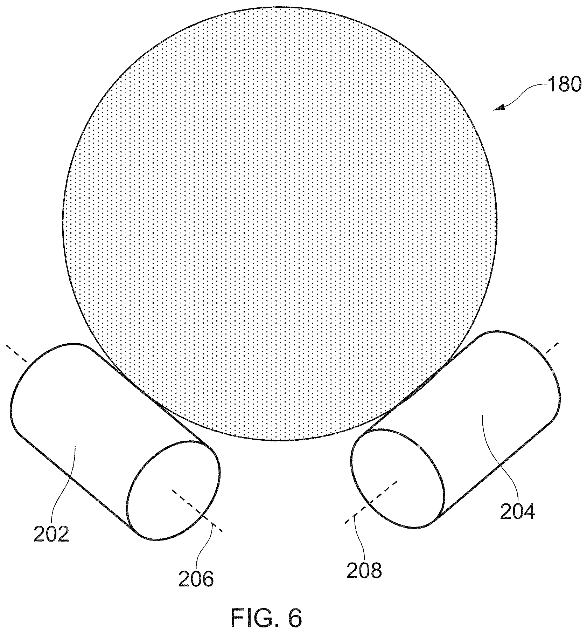

**FIG. 6** shows the spherical container 180 of FIG. 4 or FIG. 5 positioned on two rotatable rollers 202, 204. One or more further rollers, or other means of support, may be provided to support a rearward region of the spherical container 180 not visible in FIG. 6. The arrangement of FIG. 6 allows the spherical container 180 to be positioned in a 3DCT scanning apparatus, such as that shown in FIG. 1, between an imaging beam emitting element (12 in FIG. 1) and an imaging beam detecting element (24 in FIG. 1) so that the spherical container 180, containing a blade (100 in FIG. 4 or FIG. 5), will lie within the x-ray beam cone (14 in FIG. 1).

The respective rotational axes 206, 208 of the rotatable rollers 202, 204 are inclined at an angle to each other. Each of the rotatable rollers 202, 204 is provided with actuators or driving means (not shown in FIG. 6) so that in use they may be rotated about their respective rotational axes 206, 208 through any desired angle. Suitable driving means and associated control means are known and need not be described here. In this way, the spherical container 180 may be caused to rotate through any desired angle, about any axis of rotation. Because the blade (100 in FIG. 4 or FIG. 5) is supported in a fixed position within and relative to the spherical container 180 by the supporting material (170 in FIG. 4 or 270 in FIG. 5) the blade 100 can therefore be rotated through any desired angle, about any axis of rotation, relative to the x-ray beam cone (14 in FIG. 1) thereby presenting it at any desired angle. To produce a plurality of projections, the blade can be rotated to any desired number of different angles or positions in succession, and a projection produced at each. The sequence of different angles or positions may be predefined as a set of instructions or a 'path' to be followed in order.

In an alternative arrangement, a plurality of magnets may be embedded in the spherical container (180 in FIG. 4 or FIG. 5) and a corresponding plurality of magnets or electromagnets may be provided on the support (18 in FIG. 1). By suitable application of control signals, the spherical container 180 may be supported in a suitable position within the x-ray beam cone (14 in FIG. 1) and may be controlled to rotate about one or more axes of rotation in the same manner as in the arrangement shown in FIG. 6. Such an arrangement may offer advantages, such as supporting the container without any physical contact and permitting more precise rotation of the container without friction or backlash.

In this way, projections or images (22 in FIG. 1) of the blade 100 may be taken at a much wider range of relative positions than in known arrangements, because the orientation of the blade relative to the x-ray beam cone (14 in FIG. 1) is not constrained only to different angular positions around a single axis of rotation. Considered in terms of a spherical coordinate system, the spherical container 180 may be rotated so that any desired point (r, θ, φ) on the surface of the spherical container 180 may be aligned (for example) with the x-ray emitting element (12 in FIG. 1). The blade 100 may therefore be brought into any desired orientation relative to the x-ray beam cone so that a much more complete and detailed set of projections may be produced. This is particularly advantageous for CT scanning of objects having complex cross sections, such as the blade 100, where it is difficult to optimise the scan parameters for all the complex and varied elements of an object. The 3D representation of such an object will therefore be of higher quality than in known arrangements.

The spherical container 180 may be provided with features that allow its position and orientation to be detected by suitable sensors. For example, indicator marks or similar features may be provided on the outer surface of the spherical container. The indicator marks may be spaced around the periphery of the spherical container. Optical sensors can detect the presence, position and orientation of the indicator marks and feed this information to a processor that can determine the position and orientation of the spherical container. In alternative arrangements, indicators may be provided on the surface of, or embedded within, the spherical container that can be detected electrically, magnetically or by contact. Suitable sensors or detectors can detect the presence, position and orientation of the indicator marks and feed this information to a processor that can determine the position and orientation of the spherical container. This position and orientation information may be used as feedback in a closed-loop control system.

The detectability of a defect in an object is very sensitive to where in the object the defect is. Being able to scan the object from any point, as described above, makes it easy to programme paths that will produce a comprehensive set of projections covering all the relevant features of the object. The path can be defined in any convenient manner, for example as a sequence of coordinates in a spherical coordinate system or as a sequence of discrete points in three-dimensional space. The coordinates or points in the sequence may be equally or unequally spaced apart, so that, for, example, the more relevant features of an object are covered by more projections and the less relevant features are covered by fewer projections.

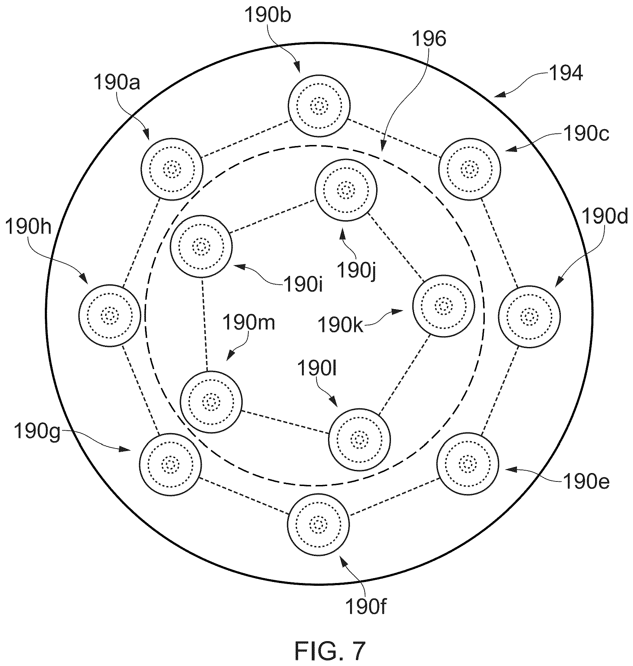

In an arrangement, a plurality of objects may be supported within one or more suitable containers and scanned simultaneously or sequentially. Such an arrangement may reduce the time required for scanning large numbers of objects. **FIG. 7** is a cross-sectional view of a plurality of objects arranged for scanning according to a method as described above. A spherical container 194 contains supporting material (in the same manner as the supporting material 170, 270 in the arrangements of FIG. 4 and FIG. 5) that supports a first set of objects 190a, 190b, 190c, 190d, 190e, 190f, 190g, 190h in fixed positions relative to the container 194.

The first set of objects 190a - 190h need not be in a single plane, as may be implied by the limitations of the two-dimensional FIG. 7, but may be spaced apart in any pattern around the circumference of the spherical container 194. The first set may also comprise further objects that are not visible in FIG. 7. The first set of objects 190a - 190h may be regularly spaced apart; for example, each object may be located at a vertex of a notional first regular polyhedron.

Optionally, a second set of objects 190i, 190j, 190k, 190l, 190m may be similarly supported within the spherical container 194 and inward of the first set of objects 190a - 190h. The second set of objects 190i - 190m are supported in supporting material in the same way as the first set of objects 190a - 190h so they are in fixed positions relative to the spherical container 194. Alternatively, the second set of objects 190i - 190m may be within a second spherical container 196, in which case the second spherical container 196 contains supporting material (in the same manner as the supporting material 170, 270 in the arrangements of FIG. 4 and FIG. 5) that supports the second set of objects 190i - 190m in fixed positions relative to the second container 196. In this case, the second spherical container 196 is itself supported by the supporting material in the spherical container 194 and is thereby held in a fixed position relative to it.

The second set of objects 190i - 190m need not be in a single plane, as may be implied by the limitations of the two-dimensional FIG. 7, but may be spaced apart in any pattern around the circumference of the spherical container 194 (and of the second spherical container 196, if present). The second set may also comprise further objects that are not visible in FIG. 7. The second set of objects 190i - 190m may be regularly spaced apart; for example, each object may be located at a vertex of a notional second regular polyhedron. This second regular polyhedron may have the same number or a different number of vertices as the first polyhedron described above.

The arrangement of FIG. 7 may be particularly suitable where a large number of similar objects are to be scanned. Once the plurality of objects is suitably supported within the spherical container 194 or containers 194, 196, only a single scanning process is required, which may provide a considerable saving in time and cost.

Though the objects 190a - 190m are shown in FIG. 7 with a circular cross-section, it will be appreciated that they may be turbine blades (100 in FIG. 3) as described above in relation to the arrangements of FIG. 4 and FIG. 5, or any other objects which are required to be scanned.

The ability of the container to orient the object in any rotational orientation in 3D space can also be used to find the best scan orientation for the object by getting the 3DCT scanner to iterate through scan orientations and find the best one. For example, for an object that is substantially isotropic (either in its geometry or in its physical characteristics), the best 3D representation of the object may be obtained by performing scans at a plurality of equally spaced orientations (r, θ, φ) around the spherical container 180. In contrast, an object that is highly anisotropic (for example the turbine blade 100) may require a more complex pattern of scans to produce an optimum 3D representation. For example, some scans or scan orientations may be more important than others. Using the embodiments disclosed herein, different scan patterns can quickly be performed and compared to identify the optimum pattern. An optimum pattern may require fewer individual scans, because the scans are concentrated in the most important positions or orientations, and would therefore be quicker and more efficient to perform. Subsequent scans on equivalent components can then be performed more quickly and more efficiently using that same optimum scan pattern.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A method (50) for scanning an object (100, 190) in a scanning apparatus (10), the method comprising:
placing (S10) the object into a container (180, 194) which surrounds the object, a volume of the container surrounding the object comprising a supporting material (170, 270) that supports the object in a fixed position relative to the container;
disposing (S20) the container on a support (18) of the scanning apparatus so that the container is positioned between an imaging beam emitting element (12) and an imaging beam receiving element (24) disposed on opposite sides of the support, the support configured to allow movement of the container relative to the emitting and receiving elements to allow creation of a plurality of projections (22) of the object each taken at a different relative position;
operating (S30) the scanning apparatus at the multiple relative positions to produce the plurality of projections; and:
processing (S40) the projections to create an image of the object;
**the method characterised in that:**
the support is configured to allow the container to be rotated to any angular position within a spherical coordinate system.

2. The method of claim 1, in which the container is spherical.

3. The method of claim 2, in which the support is configured to allow a selected point (r, θ, φ) on a surface of the container to be rotated to any position relative to the emitting and receiving elements.

4. The method of any one of the preceding claims, in which the supporting material has an imaging beam attenuation close to the imaging beam attenuation of the material of the object.

5. The method of claim 4, in which the imaging beam attenuation of the supporting material is the same as or lower than the imaging beam attenuation of the material of the object.

6. The method of any one of the preceding claims, in which the supporting material (170) comprises a powder.

7. The method of any one of claims 1 to 5, in which the supporting material (170) comprises one or more solid elements substantially filling the volume of the container surrounding the object.

8. The method of any one of claims 1 to 5, in which the supporting material (270) comprises a 3-dimensional structure.

9. The method of any one of the preceding claims, further comprising surrounding or partially surrounding the object with a border region, the border region having an imaging beam attenuation different from the imaging beam attenuation of the object.

10. The method of claim 9, in which the border region is formed by inserting the object into a protective film or wall or sleeve.

11. The method of any one of the preceding claims, in which a plurality of objects (190) is placed into the container (194) and spaced apart within the container.

12. The method of claim 11, in which each of the objects is located at a vertex of a notional regular polyhedron.

13. The method of claim 11, in which each of a first set of objects (190a-h) is located at a vertex of a notional first regular polyhedron and each of a second set of objects (190i-m) is located at a vertex of a notional second regular polyhedron within the notional first regular polyhedron.

14. The method of claim 13, in which a second container (196) is supported within the container, and in which each of the second set of objects is placed into the second container and each of the first set of objects is placed into the container.

15. A combination of a scanning apparatus (10) for scanning an object (100, 190) and a filled container in the scanning apparatus, the filled container comprising:
a container (180, 194) which surrounds the object, a volume of the container surrounding the object comprising a supporting material (170, 270) that supports the object in a fixed position relative to the container;
and the scanning apparatus comprising:
a support (18) for the container;
an imaging beam emitting element (12) and an imaging beam receiving element 24) disposed on opposite sides of the support, the support positioning the container between the imaging beam emitting element and the imaging beam receiving element, the support configured to allow movement of the container relative to the emitting and receiving elements to allow creation of a plurality of projections (22) of the object each taken at a different relative position, so that when the scanning apparatus is operated at the multiple relative positions it produces the plurality of projections; and
processing means to create an image of the object from the plurality of projections; **the combination characterised in that:**
the support is configured to allow the container to be rotated in use to any angular position within a spherical coordinate system.
